Europäisches Patentamt

(19) European Patent Office

Office européen des brevets

(11) Numéro de publication: **0 197 806**
**B1**

(12) # FASCICULE DE BREVET EUROPÉEN

(45) Date de publication du fascicule du brevet:
19.04.89

(21) Numéro de dépôt: 86400392.6

(22) Date de dépôt: 25.02.86

(51) Int. Cl.⁴: **B 32 B 17/10,** C 09 J 3/16,
C 08 G 18/65, C 08 G 18/10,
C 08 G 18/32

(54) **Couche adhésive à base de polyuréthane et son utilisation dans les vitrages feuilletés.**

(30) Priorité: 26.02.85 FR 8502741

(43) Date de publication de la demande:
15.10.86 Bulletin 86/42

(45) Mention de la délivrance du brevet:
19.04.89 Bulletin 89/16

(84) Etats contractants désignés:
DE FR GB IT SE

(56) Documents cité:
EP-A-0 133 090
FR-A-1 497 772
FR-A-1 542 454
FR-A-2 168 506
FR-A-2 208 783

(73) Titulaire: **SAINT- GOBAIN VITRAGE, Les Miroirs
18, avenue d'Alsace, F-92400 Courbevoie (FR)**

(72) Inventeur: **Frisch, Kurt Charles, Dr., 17986 Parke
Lane, Grosse Ile Michigan 48138 (US)**
Inventeur: **Klempner, Daniel, Dr., 32411
Queensboro, Farmington Hills Michigan 48018 (US)**
Inventeur: **Rädisch, Helmer, Dr., Nizzaallee 36,
D-5100 Aachen (DE)**
Inventeur: **Holzer, Gerhard, Dr., Dr. Josef
LambyStrasse 2, D-5100 Aachen (DE)**

(74) Mandataire: **Muller, René, SAINT- GOBAIN
RECHERCHE 39, quai Lucien Lefranc, F-93304
Aubervilliers (FR)**

## Description

La présente invention concerne une couche adhésive à base de polyméthane et son utilisation notamment en tant que couche transparente adhésive dans la fabrication des vitrages feuilletes. Plus particulièrement, l'invention concerne une couche adhésive à base d'un polyuréthane thermoplastique résistant à l'humidité formé à partir de polyols non sensibles à l'humidité, de polyisocyanates aliphatiques et d'un allongeur de chaîne aromatique.

Les vitrages feuilletés sont largement utilisés, notamment dans les véhicules à moteur ou dans le bâtiment. Ces vitrages comportent généralement deux feuilles de verre et une couche intercalaire d'un matériau présentant des propriétés d'absorbeur d'énergie telle que le polyvinylbutyral. Récemment, il a été décrit un nouveau type de vitrages feuilletés de sécurité dans lequel la feuille de verre orientée vers l'intérieur dm véhicule est recouverte d'une couche ou feuille d'un matériau présentant des propriétés d'antilacération et d'autocicatrisation. Les publications de brevets français 2 398 606 et européen 0 054 491 décrivent par exemple une telle structure de vitrage feuilleté. La couche présentant des propriétés d'antilacération et d'autocicatrisation, notamment un polyuréthane thermodurcissable, est liée à la feuille de verre par une couche adhésive. La publication du brevet français 2 398 606 citée ci-dessus décrit l'utilisation d'un polyuréthane thermoplastique en tant que couche adhésive et notamment l'utilisation d'un polyuréthane formé à partir d'un polyesterdiol. Bien que donnant généralement satisfaction, il peut s'avérer que ce type de polyuréthane perde une partie de ses propriétés adhésives et que la couche devienne légèrement trouble dans des conditions de température et d'humidité sévéres par exemple par une exposition prolongée dans de l'eau bouillante.

L'invention propose une nouvelle couche adhésive à base de polyuréthane pouvant être utilisée en tant que couche adhésive dans la fabrication des vitrages feuilletés, qui conserve ses propriétés de transparence et d'adhésion, même dans des conditions sévéres de température et d'humidité.

L'invention a pour objet l'utilisation d'une couche adhésive pour l'assemblage de la couche présentant des propriétés d'antilacération et d'autocicatrisation notamment de polyuréthane thermodurcissable citée ci-dessus avec un support monolithique ou feuilleté en verre ou en matière plastique, ladite couche adhésive étant à base d'un polyuréthane formé à partir d'au moins un polyétherdiol, de masse moléculaire supérieure à 300, non sensible à l'humidité, choisi parmi les poly-(oxypropylène)glycols, les poly-(1,4-oxybutylène)glycols, d'au moins un diisocyanate aliphatique ou cycloaliphatique et d'au moins un allongeur de chaîne difonctionnel contenant un noyau aromatique, choisi parmi les diols suivants: le bis-(2-hydroxyéthyl)hydroquinone, le 2,2'-propylidène-bis-(p-phenylène-oxy)-di-ω-propanol-2, le 2,2'-propylène-bis-(p-phénylèneoxy)éthylèneoxy di-ω-éthanol, bis-hydroxyéthyl-éther de résorcinol, le bis-hydroxyalkyl-éther de l'acide térephtalique et de l'acide isophthalique. Les allongeurs de chaînes préférés sont choisis parmi le bis-(2-hydroxéthyl)hydroquinone, le 2,2'-propylène-bis-(p-phénylèneoxy)-di-ω-propanol-2, le 2,2'-propylène-bis-[(p-phényléneoxy)éthylèneoxy]-di-ω-éthanol.

En tant qu'isocyanates aliphatiques pouvant être utilisés pour former la couche de polyuréthane, on peut citer les isocyanates aliphatiques suivants: 4,4'-méthylène-bis-(cyclohexyl)diisocyanate, trans-cyclohexane-1,4-diisocyanate, isophoronediisocyanate, hexa-méthylènediisocyanate,1,3-xylylènediisocyanate,1,4-xylylènediisocyanate, méta et para-tétra-méthylxylènediisocyanate, diméryldiisocyanate, menthanediisocyanate.

Pour préparer la composition adhésive selon l'invention, on peut effectuer 1a réaction entre les composants en milieu solvant de préférence. On peut utiliser la méthode du prépolymère, c'est-à-dire que l'on fait réagir le polyol avec un excès de diisocyanate pour former un prépolymère, c'est-à-dire un produit d'addition comprenant des groupements isocyanates libres. On additionne ensuite l'allongeur de chaîne à noyau aromatique. On peut encore utiliser la technique dite d'une seule étape, en mélangeant directement le polyol, le diisocyanate et l'allongeur de chaîne aromatique.

Lorsqu'on prépare la composition adhésive en milieu solvant, on peut utiliser en tant que solvant par exemple le dioxane, le tétrahydrofurane, l'acétate de cellosolve, le diméthylformamide, le xylène, le toluène, la méthyléthylcétone, la méthylisobutylcétone, l'acétate d'éthyle ou un mélange de ces solvants. On peut encore utiliser des alcools tel l'iso-propylalcool pour dissoudre les polymères.

Pour accélérer la réaction de polymérisation du polyuréthane, on peut utiliser la chaleur et/ou des catalyseurs. En tant que catalyseur, on peut utilisr par exemple des organo-étain tels que le dibutyldilaurate d'étain, oxyde de tributylétain, l'octoate d'étain, un catalyseur organomercurique, des amines tertiaire telle la triéthylènediamine.

Pour fabriquer la couche adhésive selon l'invention, on peut opérer par coulée d'une solution de polyuréthane dans un solvant ou dans un mélange de solvants. On peut aussi fabriquer la couche par extrusion.

La couche adhésive peut être formée in situ sur l'un des éléments à assembler, c'est-à-dire par exemple dans le cas où la couche adhésive est utilisée pour faire adhérer la couche ayant des propriétés d'antilacération et d'autocicatrisation sur le support, ladite couche adhesive pourra être formée in situ sur le support rigide monolithe ou feuilleté ou de préférence comme précisé par la suite sur la couche de matière plastique ayant des propriétés d'antilacération et d'autocicatrisation, et ce au cours d'un processus de fabrication en continu d'une feuille à deux couches.

Dans ce cas on peut fabriquer une feuille à deux couches de la façon suivante: on fabrique tout d'abord une première couche qui peut être soit la couche adhésive selon l'invention, soit la couche de matière plastique autocicatrisable formée notamment d'un polyuréthane thermodurcissable; et sur cette première couche, on forme la deuxième couche.

On peut aussi fabriquer tout d'abord une couche de polyuréthane thermodurcissable par coulée du mélange des composants sur un support de coulée. Après polymérisation des monomères et formation d'une couche thermodurcissable d'épaisseur pouvant varier entre 0,1 et 0,8 mm, on coule sur cette première couche une solution du polyuréthane selon l'invention. On peut encore procéder de façon inverse, c'est-à-dire en formant d'abord la couche adhésive de polyuréthane selon l'invention.

La couche adhésive selon l'invention peut être utilisée uniquement en tant qu'adhésif pour l'assemblage de la couche de matière plastique présentant des propriétés d'antilacération et d'autocicatrisation avec les autres éléments du vitrage feuilleté.

La couche adhésive selon l'invention peut encore être utilisée pour la fabrication d'autres types de vitrages feuilletés, en verre et/ou en matière plastique.

Ainsi la couche adhésive peut être utilisé pour la fabrication de vitrage feuilleté en matière plastique. Elle est alors placée par exemple entre deux feuilles ou couches de matières plastiques, par exemple en polycarbonate, en matière plastique cellulosique, en matière acrylique tel le polyméthacrylate de méthyle, le chlorure de polyvinyle, le polystyrène, le polyéthylènetéréphtalate, les polyuréthanes.

La couche selon l'invention peut contenir d'autres additifs qui servent généralement à faciliter sa fabrication. Elle peut ainsi contenir un agent nappant tel une résine silicone, un ester fluoroalkylé.

Pour fabriquer des vitrages feuilletés utilisant la couche de polyuréthane selon l'invention, on assemble les éléments par utilisation de la pression, par exemple par pinçage des éléments entre les rouleaux d'une calandreuse, et par action de la chaleur. Avantageusement un des éléments est revêtu au préalable de la couche adhésive. Ce peut être le cas échéant la couche de matière thermodurcissable dans le cas de la feuille à deux couches décrite précédemment.

Le vitrage feuilleté obtenu est clair, sa qualité optique excellente et l'adhésion entre les éléments reliés par la couche adhésive selon l'invention est également excellente. Ces propriétés de transparence et d'adhésion se conservent même sous des conditions extrêmes de température, d'humidité et de lumière et notamment après une exposition durant 2 heures dans de l'eau bouillante.

Les exemples ci-après illustrent l'invention.

## Exemple 1

On prépare un prépolymère par réaction de 1375 grammes (4,30 équivalents) de poly-(1,4-oxybutylène)glycol de masse moléculaire 650, avec 1083 grammes (13,04 équivalents) de trans-cyclohexame-1,4 diisocyanate à 65°C sous atmosphère d'azote, en présence de 1,2 grammes de dilaurate de dibutylétain en tant que catalyseur. Au prépolymère, on additionne ensuite 1462 grammes (8,87 équivalents) de 2,2'-propylidène-bis(p-phenylèneoxy)-di-ω-propanol-2 et 436 grammes d'acétate de cellosolve en tant que solvant. Après agitation, on coule le mélange sur un support plan en verre et on traite la couche formée à 100°C pendant 16 heures. Ce traitement thermique provoque l'évaporation du solvant et l'allongement de chaîne. La couche obtenue après traitement est très claire, transparente, son adhésion avec le verre est excellente. Après exposition de la couche et du substrat dans de l'eau bouillante durant 2 heures, l'adhésion et la transparence sont conservées.

A titre de comparaison lorsqu'on fabrique un polyuréthane avec les mêmes composants mais en remplaçant l'allongeur de chaîne aromatique par le 1,4-butanediol, la couche adhésive devient trouble et son adhésion avec le support est diminuée après exposition dans l'eau bouillante durant 2 heures.

Ceci met en évidence l'avantage d'utiliser un allongeur de chaîne aromatique pour la fabrication du polyuréthane.

## Exemple 2

Un prépolymère est préparé par réaction de 1462 grammes (1,51 équivalents) de poly-(1,4-oxybutylène)glycol de masse moléculaire 2000 avec 251 grammes (3,02 équivalents) de trans-cyclohexane-1,4-diisocyanate à 65°C sous atmosphère d'azote en présence de 2,4 parties de dilaurate de dibutylétain en tant que catalyseur. Au prépolymère est additionné 287 grammes (1,43 équivalents) de 2,2'-propylène-bis-[(p-phénylèneoxy)éthylèneoxyl-di-ω-éthanol et de 2000 grammes d'acétate de cellosolve. Après mélange, on coule la comoposition pour former une couche sur un support plan en verre et on traite l'ensemble à 100°C pendant 16 heures.

La couche obtenue présente une excellente qualité optique et une excellente adhésion avec le support en verre. Ces propriétés se conservent même après 2 heures dans l'eau bouillante.

## Exemple 3

Au prépolymère de l'exemple 2, on additionne 250 grammes (1,48 équivalents) de 2,2'-propylidène-bis-(p-phénylèneoxy)-di-ω-propanol-2 et 200 grammes d'acétate de cellosolve. La couche obtenue par coulée de la composition sur un support en verre présente une excellente qualité optique et une excellente adhésion avec le verre. Ces propriétés se conservent après exposition durant 2 heures dans l'eau bouillante.

## Exemple 4

On prépare un prépolymère par réaction de 1372 grammes (1,42 équivalents) de 2,2'-propylène-bis-[(p-phénylèneoxy)éthylèneoxy]-di-ω-éthanol, de poly-(1,4-oxybutylène)-glycol de masse moléculaire 2000 avec 369 grammes (2,81 équivalents) de 4,4'-méthylène-bis-(cyclohexyl)diisocyanate à 65°C sous atmosphére d'azote en présence de 36 grammes de dilaurate de dibutylétain en tant que catalyseur. Au prépolymère formé on additionne 258 grammes (1,2 g équivalents) de 2,2'-propylène-bis-[(p-phénylèneoxy)éthylène-oxy]-di-ω-éthanol et 2000 grammes d'acétate de cellosolve. La couche obtenue après coulée de la composition sur un support en verre présente une excellente qualité optique et une excellente adhésion avec le verre. Ces propriétés se conservent après exposition durant 2 heures dans l'eau bouillante.

## Exemple 5

On prépare un prépolymère par réaction de 1646 grammes (5,14 équivalents) de poly-(1,4-oxybutylène)glycol de masse moléculaire 650 avec 854 grammes (10,28 équivalents) de trans-cyclohexane-1,4-diisocyanate à 65°C sous atmosphère d'azote en présence de 3,8 grammes de dilaurate de dibutylétain en tant que catalyseur. Au prépolymère formé on additionne 865 grammes (5,13 équivalents) de 2,2'-propylidène-bis-(p-phénylèneoxy)-di-ω-propanol-2 et 748 grammes d'acétate de cellosolve. Après coulée sur un support plan en verre, la couche obtenue présente une excellente qualité optique et une excellente adhésion avec le verre. Ces propriétés se conservent même après une exposition de 2 heures dans l'eau bouillante.

## Exemple 6

On prépare un prépolymère par réaction de 2171 grammes (4,50 équivalents) de poly (1,4-oxybutylène) glycol de masse moléculaire 1000 avec 747 grammes de trans-cyclohexane-1,4-diisocyanate à 65°C sous atmosphère d'azote en présence de 3,8 grammes de dilaurate de dibutylétain en tant que catalyseur. Au prépolymère on additionne 637 grammes (3,78 équivalents) de 2,2'-propylidène-bis-(p-phénylèneoxy)-di-ω-propanol-2 et 698 grammes d'acétate de cellosolve. La couche obtenue par coulée de la composition sur un support en verre présente une excellente qualité optique et une excellente adhésion avec le support. Ces proprfétés sont conservées même après 2 heures d'exposition dans de l'eau bouillante.

## Exemple 7

On prépare un prépolymère par réaction de 1646 grammes (5,14 équivalents) de poly-(1,4-oxybutylène)glycol de masse moléculaire 650 avec 854 grammes (10,28 équivalents) de trans-cyclohexane-1,4-diisocyanate à 80°C sous atmosphère d'azote, en présence de 3,6 grammes de dilaurate de dibutylétain en tant que catalyseur. Au prépolymère maintenu à 80°C on ajoute 865 grammes (5,13 équivalents) de 2,2'-propylidène-bis-(p-phénylèneoxy)-di-ω-propanol-2. Après agitation, le mélange est versé sur une feuille de polypropylène et étendu régulièrement. La feuille revêtue est placée à 80°C durant 16 heures pour compléter la polymérisation. Le polyuréthane obtenu est dissous dans un mélange dans un rapport 1 : 1 de méthylétylcétone et de dioxane jusqu'à une concentration en matières sèches de 10 % en poids. La solution est ensuite coulée sur un support plan en verre et le solvant est éliminé par évaporation, par passage de l'ensemble dans un four à une température de 100°C pendant 1 heure. Par ce procédé, le polyuréthane est entièrement polymérisé avant la coulée pour former une couche ce qui permet de fabriquer la couche sur une ligne de production. La couche obtenue est transparente et adhère bien au verre. Exposée durant 2 heures dans de l'eau bouillante, elle conserve ces propriétés.

## Example 8

Le polyuréthane terminé de l'exemple 7 est dissous dans un mélange, dans un rapport 1 : 1 de tétrahydrofurane et de dioxane jusqu'à une concentration en matières sèches de 8,5 % en poids. La couche obtenue par coulée présente une excellente qualité optique et une excellente adhésion avec le verre. Ces propriétés sont conservées après avoir été exposée durant 2 heures dans de l'eau bouillante.

## Exemple 9

On prépare un prépolymère par réaction de 1646 grammes (5,14 équivalents) de poly-(1,4-oxybutylène)glycol de masse moléculaire 650 avec 854 grammes (10,28 équivalents) de trans-cyclohexane-1,4-diisocyanate, en présence de 3,6 grammes de dilaurate de dibutylétain en tant que catalyseur. Le prépolymère est dissous dans un mélange, dans un rapport 1 : 1, de toluène et de méthyl-éthylcétone jusqu'à une concentration de 25 % en poids de matières solides. A cette solution, on ajoute 885 grammes (5,13 équivalents) de 2,2'-propylidène-bis-(p-phénylèneoxy)-di-ω-propanol-2. La solution est agitée à 80°C sous atmosphère d'azote jusqu'à un allongement complet de chaîne. L'absence d'isocyanates libres est déterminée par une méthode de titrage à l'aide de di-n-butylamine. La solution est coulée sur un support plan en verre et le solvant est évaporé par chauffage de la couche à 100°C durant 1 heure. La couche obtenue présente une excellente qualité optique et une excellente adhésion qui se conservent après une exposition de 2 heures dans de l'eau bouillante. Par la technique décrite ci-dessus, le polyuréthane est entièrement polymérisé en solution avant la coulée.

## Exemple 10

On prépare un prépolymère par réaction de 1462 grammes (1,51 équivalents) de poly-(1,4-oxybutylène)glycol de masse moléculaire 2000 avec 256 grammes (3,08 équivalents) de trans-cyclohexane-1,4-diisocyanate, en présence de 3,8 grammes de dilaurate de dibutylétain en tant que catalyseur. Le prépolymère est ensuite dissous dans un mélange, dans un rapport 1 : 1, de toluène et de méthyléthylcétone jusqu'à 25 % en poids de matières sèches. A cette solution, on ajoute 250 grammes (1,48 équivalents) de 2,2'-propylidène-bis-(p-phénylèneoxy)di-ω-propanol-2. L'extension de chaîne est effectuée comme dans l'exemple 9. La couche obtenue par coulée de la solution sur un support plan en verre présente une excellente qualité optique et une excellente adhésion au verre. Ces propriétés se conservent même après une exposition durant 2 heures dans de l'eau bouillante.

## Exemple 11

Dans cet exemple, le polyuréthane est obtenu en une seule étape en solution. 5454 grammes (17,04 équivalents) de poly-(1,4-oxybutylène)glycol de masse moléculaire 850 sont mélangés avec 1129 grammes (11,3 g équivalents) de bis-(2-hydroxyéthyl)hydroquinone. Le mélange est dissous pour former une solution à 75 % par addition de 3330 grammes de dimiéthylformamide à 90°C sous atmosphère d'azote. Après quoi, on ajoute 3417 grammes (26,04 équivalents) de 4,4'-méthylène-bis-(cyclohexyl)diisocyanate préchauffé à 90°C. Après agitation durant 1 minute, on ajoute toujours sous agitation 4 grammes de dilaurate de dibutylétain. Le mélange est agité de façon continue à 90°C jusqu'à une augmentation de la viscosité. On dilue le mélange jusqu'à une concentration de 50 % en matières sèches par addition de 667 grammes de DMF. Après agitation et dégazage sous vide, le mélange est chauffé sous atmosphère d'azote à 90°C jusqu'à ce que la réaction soit complète ce qui est déterminé par une teneur de 0 % en isocyanate. Le mélange est étendu sur une feuille de polypropylène et le DMF est diminué par évaporation à 80°C durant 24 heures. Le polyuréthane obtenu est dissous dans un mélange dans un rapport 1 : 1 de tétrahydrofurane et de méthyléthylcétone jusqu'à une concentration de 10 % en poids de matières sèches.

Cette solution est ensuite coulée pour former une couche de 0,02 mm d'épaisseur environ sur une première couche de 0,3 mm d'épaisseur environ d'un polyuréthane thermodurcissable obtenu de la manière suivante:

Sur un support en verre revêtu d'un agent de séparation qui peut être par exemple celui décrit dans la publication de brevet français 2 383 000, à savoir un produit d'addition modifié d'éthylène oxyde, on coule un mélange homogene avec les proportions suivantes de:

- 1000 g d'un polyéther d'un poids moléculaire d'environ 450 obtenu par condensation d'oxyde de 1,2-propylène avec du 2,2-bis-(hydroxyméthyl)-1-butanol et ayant une teneur en radicaux hydroxyles libres d'environ 10,5 à 12 %, contenant 1 % en poids d'un stabilisant, 0,05 % en poids d'un catalyseur à savoir du dilaurate de dibutylétain et 0,1 % en poids d'un agent nappant,

- 1020 g d'un biuret de 1,6- hexanediisocyanate ayant une teneur en radicaux isocyanates libres d'environ 23,2 %.

On utilise une tête de coulée telle que celle décrite dans la publication de brevet français 2 347 170. On forme une couche uniforme qui après polymérisation sous l'effet de la chaleur, par exemple environ 15 minutes à 120°C, présente une épaisseur d'environ 0,3 mm et des propriétés d'autocicatrisation.

Après coulée de la deuxième couche de polyuréthane, la feuille à ceux couches est chauffée à une température de 100°C durant 30 minutes.

La feuille à deux couches est ensuite assemblée avec un support es verre par calandrage suivi d'un cycle d'autoclave.

Le vitrage obtenu présente une excellente qualité optique et une transparence parfaite.

L'adhérence obtenue entre la feuille de verre et la couche de polyuréthane est mesurée sur le

vitrage fabriqué, par un test de pelage décrit ci-dessous.

On découpe une bande de 5 cm de large de la feuille de recouvrement à deux couches. On décolle l'extrémité de la bande sur laquelle on effectue une traction perpendiculaire à la surface du vitrage, avec une vitesse de traction de 5 cm par minute. L'opération est réalisée à 20°C. On note la force de traction moyenne nécessaire au décollement de la bande. En opérant ainsi, on obtient une force de traction de 10 daN/5 cm.

Après exposition du vitrage durant 2 heures dans de l'eau bouillante les propriétés de transparence et d'adhésion sont conservées.

Lorsque la feuille à deux couches préparée selon l'exemple est assemblée avec un support en verre feuilleté forme de deux feuilles de verre et d'une couche intercalaire en polyvinylbutyral par exemple, on obtient un vitrage de sécurité ayant des propriétés d'antilacération et d'autocicatrisation, utilisable notamment en tant que pare-brise de véhicule.

**Exemple 12**

On opère de la même façon que dans l'exemple 11, sauf qu'on utilise que du poly-(1,4-oxybutylène)glycol, de masse moléculaire 1000 en tant que polyol. Ainsi, 6176 grammes (12,76 équivalents) de ce polyol est mélangé avec 876 gramines (8,84 éqvivalents) de bis-(2-hydroxyéthyl)hydroquinone et dissous dans 3330 grammes de DMF. On additionne ensuite 2945 grammes de 4,4'-méthylène-bis-(cyclohexyl)diisocyanate. On opère ensuite comme dans l'exemple 11. On obtient un vitrage feuilleté transparent pour lequel le test de pelage fournit une valeur de 16 daH/5 cm.

Ces propriétés ne sont pas effectuées par une exposition durant 2 heures dans de l'eau bouillante.

**Exemple 13**

On mélange 5454 grammes (17,04 équivalents) de poly-(1,4-oxybutylène)glycol de masse moléculaire 650 avec 1129 grammes de bis-(2-hydroxyéthyl)hydroquinone à 90°C dans 300 parties de dioxane. On ajoute ensuite 4 grammes de dilaurate de dibutylétain suivi de 3417 grammes de 4,4'-méthylène-bis-(cyclohexyl)diisocyanate. Le mélange est chauffé sous reflux à 100 - 110°C, sous agitation et sous atmosphère d'azote jusqu'à ce que la réaction soit complète ce qui est déterminé par un taux nul en isocyanate. Après refroidissement à 50°C, la solution est diluée jusqu'à une concentration de 10 % de matières solides par addition de 3000 grammes de méthyl éthylcétone et de 3000 grammes de tétrahydrofurane. On coule ensuite la composition sur un support plan en verre. La couche obtenue présente une excellente qualité optique et une excellente adhésion avec le verre. Ces propriétés sont conservées après une exposition de 2 heures dans de l'eau bouillante.

**Exemple 14**

Dan cet exemple, on procède de la même façon que dans l'exemple précédent, sauf que la polymérisation est effectuée en solution dans un mélange de 15000 grammes de dioxane et de 15000 grammes de xylène. La couche obtenue finalement présente des caractéristiques identiques à celles obtenues précédemment.

**Exemple 15**

On mélange 6176 grammes (12,76 équivalents) de poly-(1,4-oxybutylène)glycol de masse moléculaire 1000 avec 876 grammes (8,84 équivalents) bis-(2-hydroxyéthyl)hydroquinone à 90°C dans 30000 grammes de dioxane. On ajoute 4 grammes de dilaurate de dibutylétain suivi de 2945 grammes de 4,4'méthylène-bis-(cyclohexyl)diisocyanate. Le mélange est chauffé sous reflux à 100 - 110°C, sous agitation et sous atmosphère d'azote jusqu'à ce que la réaction soit complète. Après refroidissement à 50°C, 30000 grammes de méthyléthylcétone et 30000 grammes de tétrahydrofurane sont ajoutés pour réduire la concentration de la solution à 10; en poids de matières sèches. La composition est coulée sur un support plan en verre et on chauffe l'ensemble à 100°C pendant 1 heure. La couche obtenue présente une excellente qualité optique et une excellente adhésion avec le verre. Ces propriétés sont conservées après une exposition de 2 heures dans de l'eau bouillante.

**Exemple 16**

On fait réagir 7605 grammes (7,86 équivalents) de poly-(1,4-oxybutylène)glycol de masse moléculaire 2000 avec 548 grammes de bis-(2-hydroxéthyl)hydroquinone dans 30000 grammes de dioxane de 90°C. On ajoute 4 grammes de dilaurate de dibutylétain puis 1845 grammes de 4,4'-méthylène-bis-(cyclohexyl)diisocyanate. La solution est chauffée à 100 - 110°C sous reflux et sous azote jusqu'à ce que la réaction soit complète. Après refroidissement à 50°C, la solution est diluée à 10 % par ajout de 30000 grammes de méthyléthylcétone et par 30000 grammes de tétrahydrofurane. On coule la composition sur un support plan en verre et on chauffe à 100°C pendant une heure. On obtient une couche présentant une excellente qualité optique et une excellente adhésion avec le verre.

Ces propriétés sont conservées après une exposition de 2 heures dans de l'eau bouillante.

**Exemple 17**

On procède comme décrit dans l'exemple 11, sauf qu'au lieu d'assembler la feuille bi-couche obtenue sur un support en verre, on utilise un support en matière plastique tel le polycarbonate, le polyméthacrylate de méthyl, l'acétate de cellulose, l'acétobutyrate de cellulose, le chlorure de polyvinyle, le polystyrène, le polyester, le polyuréthane. Dans tous les cas on obtient un vitrage de bonne qualité optique.

**Revendications**

1. Utilisation d'une couche adhésive transparente à base de polyuréthane utilisable dans les vitrages feuilletés pour l'adhésion d'une couche de matière plastique ayant des propriétés d'autocicatrisation et d'antilacération, notamment en polyuréthane thermodurcissable avec les autres éléments du vitrage feuilleté, notamment une feuille de verre, caractérisé en ce que le polyuréthane est formé à partir d'au moins un diisocyanate aliphatique ou cycloaliphatique, d'au moins un polyétherdiol, choisi parmi les poly-(1,4-oxybutylène)diols et les poly-(oxypropylène)diols, et d'au moins un allongeur de chaîne difonctionnel contenant un noyau aromatique choisi parmi le groupe de diols suivants: le bis-(2-hydroxyéthyl)hydroquinone, le 2,2'-propylidène-bis-(p-phenyleneoxy)-di-ω-propanol-2, le 2,2'-propylène-bis-[(p-phénylèneoxy)éthylèneoxy]-di-ω-éthanol, le bis-hydroxyéthyléther de résorcinol, le bis-hydroxyalkyléther de l'acide téréphtalique et de l'acide isophthalique.

2. Utilisation d'une couche adhésive transparente selon la revendication 1, caractérisée en ce que le diisocyanate aliphatique est choisi parmi le groupe constitué par le 4,4'-méthylène bis-(cyclohexyl)diisocyanate, le trans-cyclohexane-1,4-diisocyanate, l'isophorone diisocyanate, l'hexaméthylène diisocyanate, le diméryldiisocyanate.

3. Utilisation d'une couche adhésive transparente selon la revendication 2, caractérisée en ce que le diisocyanate est choisi parmi le trans-cyclohexane-1,4-diisocyanate, le 4,4'-méthylène-bis-(cyclohexyl)diisocyanate.

4. Utilisation d'une couche adhésive transparente selon une des revendications 1 à 3, caractérisée en ce que le polyol est le poly-(1,4-oxybutylène)diol.

5. Utilisation d'une couche adhésive transparente selon une des revendications 1 à 4, caractérisée en ce que le polyol présente une masse moléculaire comprise entre 300 et 3000.

6. Utilisation d'une couche adhésive transparente selon une des revendications 1 à 5, caractérisée en ce que l'allongeur de chaine aromatique est un diol choisi dans le groupe constitué par le bis-(2-hydroxyéthyl)hydroquinone, le 2,2'-propylidène-bis-(p-phénylèneoxy)-di-propanol-2, le 2,2'-propylène-bis-[(p-phénylèneoxy)éthylèneoxy]-di-ω-éthanol.

7. Vitrage feuilleté comprenant une couche adhésive selon une des revendications 1 à 6.

8. Feuille de matière plastique transparente, de haute qualité optique utilisée dans la fabrication des vitrages feuilletés, comprenant deux couches, une couche de matière plastique présentant des propriétés d'autocicatrisation et d'antilacération, notamment un polyuréthane thermodurcissable et une couche de matière plastique présentant des propriétés d'adhésion, caractérisée en ce que la couche de matière plastique présentant des propriétés d'adhésion est la couche adhésive selon une des revendications 1 à 6.

**Patentansprüche**

1. Verwendung einer transparenten Klebeschicht auf Polyurethangrundlage, brauchbar in Verbundglas zum Verkleben einer Schicht aus Kunststoffmaterial, das selbstheilend und reißfest ist, insbesondere aus wärmehärtbarem Polyurethan, mit anderen Elementen des Verbundglases, insbesondere einer Glasscheibe,
dadurch gekennzeichnet, daß
das Polyurethan hergestellt ist aus mindestens einem aliphatischen oder cycloaliphatischen Diisocyanat, mindestens einem Polyetherdiol, ausgewählt aus Poly(1,4-oxybutylen)diolen und Poly(oxypropylen)diolen, und mindestens einem difunktionellen Kettenverlängerungsmittel, das einen aromatischen Kern enthält, ausgewählt aus der folgenden Gruppe von Diolen: Bis-(2-hydroxyethyl)hydrochinon, 2,2'-Propyliden-bis-(p-phenylenoxy)-di-ω-propanol-2, 2,2'-Propylen-bis-[(p-phenylenoxy)ethylenoxy]-di-ω-ethanol, dem Bishydroxyethylether von Resorcin, dem Bishydroxyalkylether der Terephthalsäure und der Isophthalsäure.

2. Verwendung einer transparenten Klebeschicht nach Anspruch 1, dadurch gekennzeichnet, daß das aliphatische Diisocyanat ausgewählt ist aus der Gruppe bestehend aus 4,4'-Methylenbis(cyclohexyl)diisocyanat, trans-Cyclohexan-1,4-diisocyanat, Isophorondiisocyanat, Hexamethylendiisocyanat, Dimeryldiisocyanat.

3. Verwendung einer transparenten Klebeschicht nach Anspruch 2, dadurch gekennzeichnet, daß das Diisocyanat ausgewählt ist aus trans-Cyclohexan-1,4-diisocyanat, 4,4'-Methylenbis(cyclohexyl)diisocyanat.

4. Verwendung der transparenten Klebeschicht nach einem der Ansprüche 1 bis 3, dadurch gekennzeichnet, daß das Polyol Poly-(1,4-oxybutylen)diol ist.

5. Verwendung der transparenten Klebeschicht nach einem der Ansprüche 1 bis 4, dadurch gekennzeichnet, daß das Polyol eine Molmasse von 300 bis 3 000 aufweist.

6. Verwendung einer transparenten Klebeschicht nach einem der Ansprüche 1 bis 5, dadurch gekennzeichnet, daß das aromatische Kettenverlängerungsmittel ein Diol ist, ausgewählt aus der Gruppe bestehend aus Bis-(2-hydroxyethyl)hydrochinon, 2,2'-Propyliden-bis-(p-phenylenoxy)-di-ω-propanol-2, 2,2'-Propylen-bis[(p-phenylenoxy)ethylenoxy]-di-ω-ethanol.

7. Verbundglas mit einer Klebeschicht nach einem der Ansprüche 1 bis 6.

8. Scheibe aus transparentem Kunststoffmaterial hoher optischer Qualität, wie es bei der Herstellung von Verbundglas verwendet wird, mit zwei Schichten, nämlich einer Schicht aus Kunststoffmaterial, das selbstheilend und reißfest ist, insbesondere einem wärmehärtbaren Polyurethan, und einer Schicht aus Kunststoffmaterial, die Klebeeigenschaften aufweist, dadurch gekennzeichnet, daß die Kunststoffschicht mit den Klebeeigenschaften die Klebeschicht nach einem der Ansprüche 1 bis 6 ist.

## Claims

1. Use of a transparent adhesive layer based upon polyurethane capable of being used in laminated panes for bonding a layer of plastics material having self-healing and antilaceration properties, notably of thermosetting polyurethane, to the other elements of the laminated pane, notably a sheet of glass, characterized in that the polyurethane is formed from at least one aliphatic or cycloaliphatic diisocyanate, at least one polyether diol selected from among the poly(1,4-oxybutylene)diols and the poly(oxypropylene)diols and at least one difunctional chain lengthener containing an aromatic core selected from among the group of the following diols: bis-(2-hydroxyethyl)hydroquinone, 2,2'-propylidene-bis-(p-phenyleneoxy)-di-ω-propanol-2, 2,2'-propylene-bis-[(p-phenyleneoxy)ethyleneoxyl-di-ω-ethanol, resorcinol bis-hydroxyethyl ether, terephthalic acid bis-hydroxyalkyl ether and isophthalic acid bis-hydroxyalkyl ether.

2. Use of a transparent adhesive layer according to Claim 1, characterized in that the aliphatic diisocyanate is chosen from the group constituted of 4,4'-methylene-bis-(cyclohexyl)diisocyanate, trans-cyclohexane-1,4-diisocyanate, isophorone diisocyanate, hexamethylene diisocyanate, dimeryl diisocyanate.

3. Use of a transparent adhesive layer according to Claim 2, characterized in that the diisocyanate is chosen from among trans-cyclohexane-1,4-diisocyanate, and 4,4'-methylene-bis-(cyclohexyl)diisocyanate.

4. Use of a transparent adhesive layer according to one of Claims 1 to 3, characterized in that the polyol is poly(1,4-oxybutylene)diol.

5. Use of a transparent adhesive layer according to one of Claims 1 to 4, characterized in that the polyol possesses a molecular weight from 300 to 3,000.

6. Use of a transparent adhesive layer according to one of Claims 1 to 5, characterized in that the aromatic chain lengthener is a diol chosen from the group constituted of bis-(2-hydroxyethyl)hydroquinone, 2,2'-propylidene-bis-(p-phenyleneoxy)-di-ω-propanol-2, and 2,2'-propylene-bis-[(p-phenyleneoxy)ethyleneoxy] di-ω-ethanol.

7. Laminated pane comprising an adhesive layer according to one of Claims 1 to 6.

8. Sheet of transparent plastics material of high optical quality used in the production of laminated panes, comprising two layers, a layer of plastics material possessing self-healing and anti-laceration properties, notably a thermosetting polyurethane, and a layer of plastics material possessing adhesion properties, characterized in that the layer of plastics material possessing adhesion properties is the adhesive layer according to one of Claims 1 to 6.